# EUROPÄISCHE PATENTSCHRIFT

(11) **EP 1 039 155 B1**
(45) Veröffentlichungstag und Bekanntmachung des Hinweises auf die Patenterteilung: **13.10.2004**
(21) Anmeldenummer: 99123546.6
(22) Anmeldetag: 26.11.1999
(51) Int. Cl.: F16B 37/04

(54) **Befestigungsanordnung für die Anbringung eines Bauteils an einer C-förmigen Halteschiene**
Fastening arrangement for installing an element on a C-shaped holding rail
Système de fixation pour l'installation d'un élément sur une raie de suspension en forme de C

(30) Priorität: 19.03.1999 DE 19912474
(43) Veröffentlichungstag der Anmeldung: 27.09.2000
(73) Patentinhaber: WOPF Befestigungselemente GmbH, 21339 Lüneburg (DE)
(72) Erfinder: WOPF Befestigungselemente GmbH, 21339 Lüneburg (DE)
(74) Vertreter: Patentanwälte Hauck, Graalfs, Wehnert, Döring, Siemons, Schildberg

(56) Entgegenhaltungen:
- DE-U- 29 820 923

## Beschreibung

Die Erfindung bezieht sich auf eine Befestigungsanordnung für die Anbringung eines Bauteils an einer C-förmigen Halteschiene.

Für die Anbringung von Rohren oder Leitungen und auch von anderen Installationsmitteln ist bekannt, C-förmige Halteschienen an einem Untergrund, beispielsweise einer Wand oder einer Decke, anzubringen. Mit den Halteschienen werden Bauteile an einem gewünschten Ort der C-förmigen Schiene angebracht, die ihrerseits dann Installationsbauteile halten.

Aus der EP 0 604 361 ist bekannt geworden, die C-Schiene mit einer nach einwärts gebogenen Kante beidseits des offenen Schlitzes zu versehen, die darüber hinaus verzahnt ist.

Die Befestigungsvorrichtung weist einen unrunden Kopf auf, der durch die Öffnung der Schiene einführbar ist und durch Drehung die Kanten untergreift. Eine Zahnung am Kopf wirkt mit der Zahnungsschiene zusammen, um eine Festlegung in Längsrichtung der Schiene zu erhalten.

Der Kopf weist ein Innengewinde auf, das mit einem Gewindebolzen zusammenwirkt, dessen Kopf an einem an der Schiene zu befestigenden Bauteil anliegt. Zwischen dem Kopf des Bolzens und dem in der Schiene einsitzenden Kopf ist eine Scheibe angeordnet, die die längliche Öffnung im zu befestigenden Bauteil so überdeckt, daß sie nicht durch das längliche Loch hindurchtreten kann. Zwischen dem in der Schiene einsitzenden Kopf und der Scheibe ist eine Feder angeordnet. Nach dem Einsetzen des Kopfes in die C-Schiene kann die Scheibe verdreht werden und verdreht dadurch den Kopf in der Schiene um 90°, so daß die Befestigungsvorrichtung klemmend festgehalten ist. Es ist zwar möglich, die Befestigungsvorrichtung in Längsrichtung der Schiene nach Belieben zu verschieben, die jeweils eingenommene Position wird jedoch stets eingehalten. Anschließend wird durch Drehung des Bolzenkopfes eine endgültige Befestigung der zu befestigenden Bauteile an der Halteschiene vorgenommen.

Diese Befestigungsvorrichtung hat einen Vorteil gegenüber bekannten Befestigungsvorrichtungen, indem am unteren Ende eines Gewindebolzens ein kopfartiges Gegenstück angebracht ist, das zunächst in die Schiene eingeführt wird, damit der Gewindebolzen durch eine Öffnung des zu befestigenden Bauteils aus der Schiene herausgeführt werden kann. Anschließend wird eine Mutter auf den Gewindebolzen aufgeschraubt, um eine endgültige Befestigung vorzunehmen. Eine vorübergehende Festlegung ist bei dieser Art Befestigungsvorrichtung nicht möglich.

Aus der US 4 666 355 ist auch bekannt geworden, das Gegenstück in einer Schiene mit Hilfe einer auf der offenen Seite der Schiene anbringbaren Scheibe vorübergehend festzulegen, wobei durch die Scheibe zwei Schenkel eines Halteelementes gesteckt sind, die mit einer Ausnehmung im Gegenstück zusammenwirken und mit deren Hilfe das Gegenstück innerhalb der Schiene verdreht werden kann, damit es mit den Kanten des Schienenschlitzes in Eingriff kommt. Zu diesem Zweck weist die Scheibe zwei gegenüberliegende sichelartige Ausnehmungen auf. Bei dieser Konstruktion ist das Gegenstück als Mutter ausgebildet, so daß ein Gewindebolzen von außen eingeschraubt werden kann und das Einführen des Gewindebolzens in die Schiene und das Herausführen aus dem Schienenschlitz in die Öffnung des zu befestigenden Teils entfällt mithin.

Die DE 197 52 714 A1, die den nächstliegenden Stand der Technik bildet, beschreibt eine Befestigungsanordnung für die Anbringung eines Bauteils an einer C-förmigen Halteschiene, die nach innen gebogene, den Montageschlitz begrenzende Randabschnitte aufweist. Sie hat ein topfartiges Bauteil mit einem Außendurchmesser geringfügig kleiner als die Breite des Montageschlitzes, dessen Boden ein Loch aufweist und dessen oberer Rand einen radial nach außen weisenden Flansch hat, wobei der Abstand des Flansches von der Unterseite des topfartigen Bauteils kleiner ist als die Höhe der Randabschnitte und der Durchmesser des Flansches größer ist als die Breite des Montageschlitzes. Sie hat einen Gewindebolzen, an dessen einem Ende drehfest ein längliches, durch den Montageschlitz in vorgegebener Ausrichtung hindurchführbares Gegenstück angeordnet ist und auf dessen anderes Ende eine Mutter aufschraubbar ist. Auf den Gewindebolzen ist zwischen Mutter und dem topfartigen Bauteil eine Scheibe aufsteckbar, deren Außendurchmesser gleich oder größer ist als der Außendurchmesser des radialen Flansches. Ferner ist eine Feder zwischen dem Boden des topfartigen Bauteils und der Scheibe angeordnet. Diese Befestigungsanordnung besteht aus wenigen unaufwendigen Bauteilen, kann einfach gefertigt werden, ermöglicht eine einfache Montage sowie eine vorläufige Festlegung an der Halteschiene.

Bei einer praktischen Ausführung wird die Befestigungsposition erreicht, wenn das Gegenstück innen an den Seitenwänden der Halteschiene anschlägt. Aufgrund von Abmessungstoleranzen der Halteschiene kann jedoch im Einzelfall ein solcher Anschlag nicht erreicht werden, wodurch die Kontrolle des Erreichens der Befestigungslage und das Festschrauben der Befestigungsanordnung erschwert sein kann. Von der Oberseite der Scheibe aus ist nicht ohne weiteres kontrollierbar, ob das Gegenstück die Befestigungsposition erreicht hat. Bisweilen wird auch das Schwenken des Gewindestückes unter die Randabschnitte durch Drehen des Gewindebolzens als nachteilig empfunden.

Davon ausgehend liegt der Erfindung die Aufgabe zugrunde, eine montagefreundlichere Befestigungsanordnung für die Anbringung eines Bauteils an einer C-förmigen Halteschiene mit den Montageschlitz begrenzenden Randabschnitten zu schaffen.

Die Aufgabe wird durch eine Befestigungsanordnung mit den Merkmalen des Anspruches 1 gelöst. Vorteilhafte Ausgestaltungen der Anordnung sind in den Unteransprüchen angegeben.

Die erfindungsgemäße Befestigungsanordnung weist folgende Merkmale auf:
- ein topfartiges Bauteil mit einem Außendurchmesser kleiner als die Breite des Montageschlitzes, dessen Boden ein Loch und dessen oberer Rand einen radial nach außen weisenden Flansch aufweist, dessen Außendurchmesser größer ist als die Breite des Montageschlitzes,
- ein rohrförmiges Bauteil, das teleskopierbar in das topfartige Bauteil eingreift und drehfest mit diesem verbunden ist,
- eine Scheibe, deren Außendurchmesser gleich oder größer als der Außendurchmesser des radialen Flansches ist, die drehfest mit einem aus dem topfartigen Bauteil herausstehenden Ende des rohrförmigen Bauteils verbunden ist und ein zentrales Loch aufweist,
- einen Gewindebolzen, der das zentrale Loch der Scheibe, das rohrförmige Bauteil und das topfartige Bauteil durchgreift, der an einem Ende einen die Scheibe übergreifenden Kopf aufweist und der am anderen Ende in eine Gewindebohrung einer länglichen Schiebemutter geschraubt ist, die drehfest mit dem rohrförmigen verbunden ist, die durch den Montageschlitz in einer vorgegebenen Ausrichtung hindurchführbar ist und die unter Einschieben des rohrförmigen Bauteils in das topfartige Bauteil in eine senkrechte Ausrichtung zum Montageschlitz bringbar ist, in der sie die Randabschnitte untergreift,
- eine Feder zwischen dem Boden des topfartigen Bauteils und der Scheibe oder einem nach innen vorstehenden Rand des rohrförmigen Bauteils.

Diese Befestigungsanordnung ist in einfacher Weise an einer C-förmigen Halteschiene montierbar. Hierzu kann das anzubringende Bauteil außen auf die Seite der C-förmigen Halteschiene mit dem Montageschlitz aufgesetzt werden. Anschließend kann die Befestigungsanordnung mit der Schiebemutter und dem topfartigen Bauteil durch ein Loch des anzubringenden Bauteiles in den Montageschlitz der Halteschiene eingeführt werden, bis der Flansch des topfartigen Bauteiles auf dem Rand des Loches des anzubringenden Bauteiles aufsitzt. Hierbei kann die Befestigungsanordnung an der großen Scheibe gegriffen werden, welche unter der Wirkung der zwischen rohrförmigem und topfartigem Bauteil angeordneten Feder zwischen rohrförmigem Bauteil und Kopf des Gewindebolzens gehalten sein kann.

Anschließend drückt der Monteur von oben gegen die Scheibe bzw. den Kopf des Gewindebolzens, wodurch das rohrförmige Bauteil weiter in das topfartige Bauteil eingeschoben und die Schiebemutter weiter vom Flansch des topfartigen Bauteils entfernt wird. Durch dieses tiefere Einschieben der Schiebemutter in die Halteschiene läßt sie sich unter die Randabschnitte der Montageschlitze schwenken. Dies kann leicht durch Drehen der Scheibe geschehen, die über das rohrförmige Bauteil und das topfartige Bauteil drehfest mit der Schiebemutter verbunden ist. Anschließend wird die Scheibe bzw. der Gewindebolzen entlastet, so daß die Feder das rohrförmige Bauteil und das topfförmige Bauteil wieder etwas auseinanderdrückt. Dabei verschiebt das rohrförmige Bauteil über die Scheibe den Kopf des Gewindebolzens, so daß die Schiebemutter gegen die Unterseite der Randabschnitte in eine Vormontagestellung gedrückt wird. In dieser Stellung kann bereits mindestens ein Zahn auf der Schiebemutter mit einer Zahnung an der unteren Kante der Randabschnitte zusammenwirken, um einer Verschiebung der Befestigungsanordnung entgegenzuwirken.

Danach kann die Montage der Befestigungsanordnung durch Anziehen des Gewindebolzens abgeschlossen werden. Das Anziehen des Gewindebolzens kann über einen Werkzeugangriff an einem Kopf erfolgen, bei dem es sich insbesondere um ein integral mit dem Gewindebolzen ausgebildeten Schraubenkopf oder eine verdrehsicher festgelegte Mutter handeln kann. Dabei wird die Scheibe entgegen der Wirkung der Feder auf das anzubringende Bauteil gedrückt. Die Montage kann beendet werden, wenn ein bestimmtes Anziehmoment erreicht ist. Eine Verdrehsicherung des Gewindebolzens wird durch die Feder und die Scheibe unterstützt. Die ist jedoch in umgekehrter Schrittfolge demontierbar und für eine neue Befestigung verwendbar.

Topfartiges Bauteil und rohrförmiges Bauteil können insbesondere aus Kunststoff hergestellt werden, um Kosten zu sparen. Befestigungskräfte brauchen nämlich letztlich nicht über diese Elemente der Befestigungsanordnung übertragen zu werden. Hierfür kann die Scheibe an der Unterseite eine Aufnahme aufweisen, die den Flansch des topfförmigen Bauteiles aufnimmt. Bevorzugt sind jedoch die kraftübertragenden Bauteile, d.h. Gewindebolzen, Schiebemutter und Scheibe aus einem Metall, vorzugsweise Stahl, hergestellt.

Zur Erleichterung der Kontrolle der korrekten Ausrichtung der Schiebemutter unter den Randabschnitten kann das topfartige Bauteil außen einen Anschlag aufweisen, der in der korrekten Ausrichtstellung gegen einen Gegenanschlag des Loches des anzubringenden Bauteiles trifft. Zusätzlich oder statt dessen kann die Scheibe eine Markierung aufweisen, die bei korrekter Ausrichtung der Schiebemutter zu den Randabschnitten eine definierte Ausrichtung zur Schiene hat. Bei dieser Markierung handelt es sich vorzugsweise um Löcher der Scheibe, die der Aufnahme von axialen Vorsprüngen zur Verdrehsicherung des rohrförmigen Bauteiles an der Scheibe dienen. So kann die korrekte Montagestellung dadurch definiert sein, daß die Markierungen auf der Längsachse der Halteschiene angeordnet sind.

Die Erfindung wird nachfolgend anhand der nachfolgenden Beschreibung der anliegenden Zeichnungen eines Ausführungsbeispieles näher erläutert. In den Zeichnungen zeigen:
- Fig. 1: eine Befestigungsanordnung im Sprengbild von der Vorderseite;
- Fig. 2a, b: Scheibe derselben Befestigungsanordnung in Draufsicht (Fig. 2a) und Vorderansicht (2b);
- Fig. 3a, b: rohrförmiges Bauteil derselben Anordnung in Vorderansicht (Fig. 3a) und Draufsicht (3b);
- Fig. 4a, b: topfartiges Bauteil derselben Anordnung in Draufsicht (Fig. 4a) und Vorderansicht (4b);
- Fig. 5a, b, c: Schiebemutter derselben Anordnung in Draufsicht (Fig. 5a), Vorderansicht (5b) und Seitenansicht (5c).
- Fig. 6a, b: zusammengesetzte Befestigungsanordnung in einer vergrößerten Vorderansicht (Fig. 6a) und in einer vergrößerten Seitenansicht (Fig. 6b);
- Fig. 7: eine C-förmige Halteschiene im Querschnitt;
- Fig. 8: ein anzubringendes Bauteil in der Draufsicht.
- Fig. 9: Befestigungsanordnung mit einem Bauteil an einer Halteschiene in vergrößertem Längsschnitt.

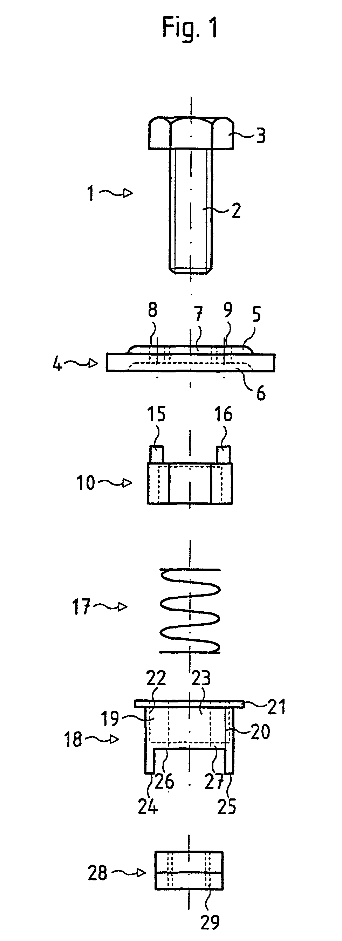

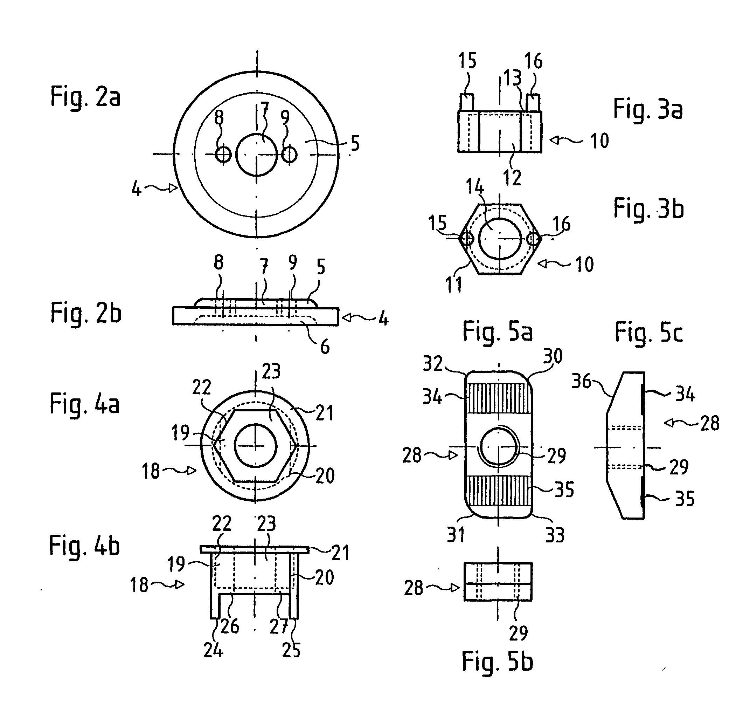

Gemäß Fig. 1 bis 5 umfaßt die Befestigungsanordnung eine Schraube 1 mit einem Gewindebolzen 2 und einem Schraubenkopf 3. Diese besteht aus Metall.

Ferner gehört dazu eine kreisförmige Scheibe 4, die unter einer zentral angeordneten Auswölbung 5 eine Ausnehmung 6 aufweist. Die Scheibe 4 hat ferner ein zentrales, axial gerichtetes Loch 7 und zwei kleinere axiale Löcher 8, 9, die diametral bezüglich des Loches 7 angeordnet sind. Durch das Loch 7 ist der Gewindebolzen 2 hindurchführbar. Die Scheibe 4 besteht vorzugsweise ebenfalls aus Metall, wobei die Wölbung 5 durch Umformen eines Rohlings hergestellt sein kann.

Ferner umfaßt die Anordnung ein rohrförmiges Bauteil 10, dessen äußere, umfangsseitige Oberfläche 11 der einer Sechskantschraube entspricht. Es hat eine zylindrische Aufnahme 12, die an einem Ende durch einen nach innen radial vorspringenden, umlaufenden Rand 13 begrenzt ist. Das dort verbleibende Loch 14 ist gerade ausreichend, um den Gewindebolzen 2 hinzuführen.

An demselben Ende trägt das rohrförmige Bauteil 10 stimseitig axiale, stiftförmige Vorsprünge 15, 16, die diametral bezüglich des Loches 14 angeordnet sind und in die Löcher 8, 9 der Scheibe 4 einfädelbar sind.

Ferner gehört zu der Anordnung eine Schraubenfeder 17 aus einem Federstahldraht, der eine verhältnismäßig große Steigung aufweisen kann. Es kann sich um eine verhältnismäßig weiche Feder handeln. Deren Außendurchmesser ist so gewählt, daß sie in die Aufnahme 12 des rohrförmigen Bauteiles 10 hineinpaßt. Ihr Innendurchmesser ist so gewählt, daß der Gewindebolzen 2 hindurchgesteckt werden kann.

Außerdem ist ein topfartiges Bauteil 18 vorhanden. Dessen Mantel 19 ist im wesentlichen zylindrisch, weist jedoch an einer Umfangsposition eine etwas vorspringende, axial erstreckte Anschlagkante 20 auf. Das Bauteil 18 trägt an einer Stirnseite einen umlaufenden, radial nach außen weisenden Flansch 21. Die innen umfängliche Oberfläche 22 seiner Aufnahme 23 ist komplementär zur äußeren Oberfläche 11 des rohrförmigen Bauteiles 10. Die Abmessungen sind so gewählt, daß das rohrförmige Bauteil 10 von der Flanschseite in die Aufnahme 23 des topfartigen Bauteils eingeschoben werden kann und über die Oberflächen 11, 22 drehfest mit diesem verbunden ist. Am anderen Ende hat das topfartige Bauteil 18 zwei axial gerichtete, einander diametral gegenüberliegende Vorsprünge 24, 25, die außen entsprechend dem Abschnitt 19 zylindrisch sind. Innen sind die Vorsprünge 24, 25 von axialen, parallel ausgerichteten Flächen begrenzt.

Das topfartige Bauteil 18 hat einen Boden 26, in dem wiederum ein zentrales Loch 27 ausgebildet ist, durch das der Gewindebolzen 2 hindurchpaßt.

Der Außendurchmesser des topfförmigen Bauteiles 18 ist geringfügig kleiner als die Breite des Montageschlitzes einer C-förmigen Halteschiene gewählt. Die Unterseite des Bodens 26 ist flach ausgebildet.

Das rohrförmige Bauteil 10 und das topfförmige Bauteil 18 bestehen bevorzugt aus Kunststoff.

Dann weist die Anordnung eine Schiebemutter 28 auf, deren Gestaltung im wesentlichen derjenigen des Gegenstückes gemäß DE 197 52 114 A1 entspricht. Die Schiebemutter 28 ist ein im wesentlichen plattenförmiges, rechteckiges Bauelement mit einer länglichen Form, das im Zentrum eine quer zur Plattenebene ausgerichtete, durchgehende Gewindebohrung 29 hat, in die der Gewindebolzen 2 eindrehbar ist. Die Schiebemutter 28 hat an zwei diametral bezüglich der Gewindebohrung 29 angeordneten Ecken Radien 30, 31, die größer als die Radien 32, 33 an den beiden übrigen Ecken sind. Auf der Oberseite hat die Schiebemutter 28 in Abstand von der Gewindebohrung 29 zwei parallele Zahnreihen 34, 35. Die Unterseite der Schiebemutter 28 ist mit zu den beiden Schmalseiten hin erstreckten Abschrägungen 36, 37 versehen.

Der Querschnitt der Schiebemutter 28 ist so bemessen, daß diese in die zwischen 26 und Vorsprüngen 24, 25 des topfartigen Bauteiles 18 gebildete Aufnahme hineinpaßt. Bevorzugt ist die Schiebemutter 28 ebenfalls aus Metall hergestellt.

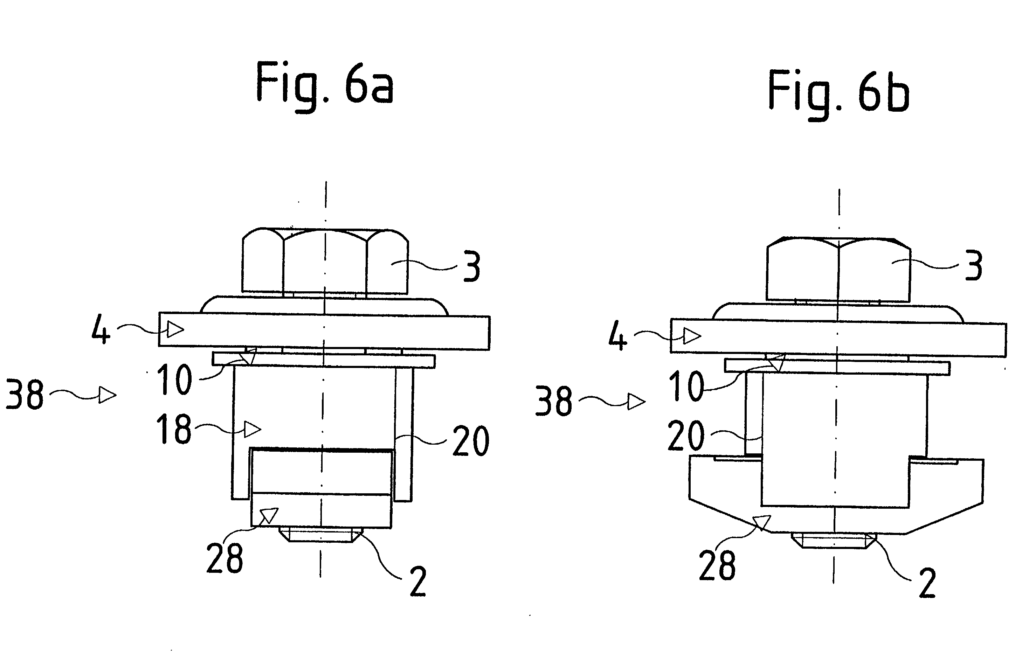

Gemäß Fig. 6 sind die vorerwähnten Elemente zu einer Anordnung 38 zusammengesetzt. Dafür ist zunächst die Scheibe 4 mit dem Schraubenkopf 3 zugewandter Auswölbung 5 mit ihrem Loch 7 auf den Gewindebolzen 2 geschoben worden. Danach ist das rohrförmige Bauteil 10 mit dem Loch 14 auf den Gewindebolzen 2 geschoben und mit seinen Vorsprüngen 14, 16 in die Löcher 8, 9 der Scheibe 4 eingefädelt worden. Danach ist die Feder 17 auf den Gewindebolzen 2 geschoben worden. Danach wurde das topfartige Bauteil 18 mit seinem Loch 27 auf den Gewindebolzen 2 gefädelt, so daß das rohrförmige Bauteil 10 in seine Aufnahme 23 eingreift und sich die Feder 17 an seinem Boden 26 abstützt. Schließlich kann die Schiebemutter 28 mit ihrer Oberseite voran in die Aufnahme zwischen den Vorsprüngen 24, 25 und dem Boden 26 des topfartigen Bauteiles 18 plaziert und der Gewindebolzen 2 etwas in die Gewindebohrung 29 eingedreht werden. Danach stehen die Endbereiche der Schiebemutter 28 seitlich über den zylindrischen Abschnitt 19 des topfartigen Bauteils 18 hinaus.

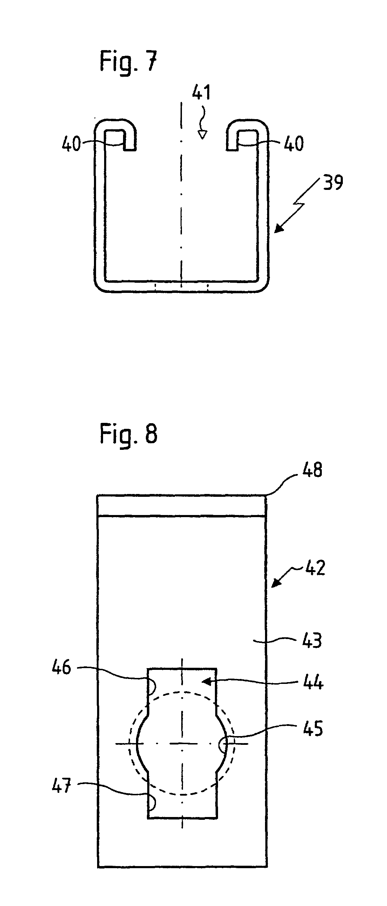

Die Anordnung 38 ist zum Zusammenwirken mit einer C-förmigen Halteschiene 39 gemäß Fig. 7 bestimmt. Diese hat nach innen gebogene Randabschnitte 40, die einen längsgerichteten Montageschlitz 41 begrenzen.

Ferner kann die Anordnung 38 mit einem Bauteil 42 gemäß Fig. 8 zusammenwirken. Diese hat einen plattenförmigen Teil 43, in dem mindestens ein schlüssellochförmiges Loch 44 ausgebildet ist. Dieses Loch 44 hat im Zentrum einen zylindrischen Abschnitt 45 und diametral einander gegenüberstehende, rechteckförmige Abschnitte 46, 47. Die Platte 43 kann an der Seite einen abgewinkelten Schenkel 48 haben, der der Halterung von Installationsmitteln dienen kann.

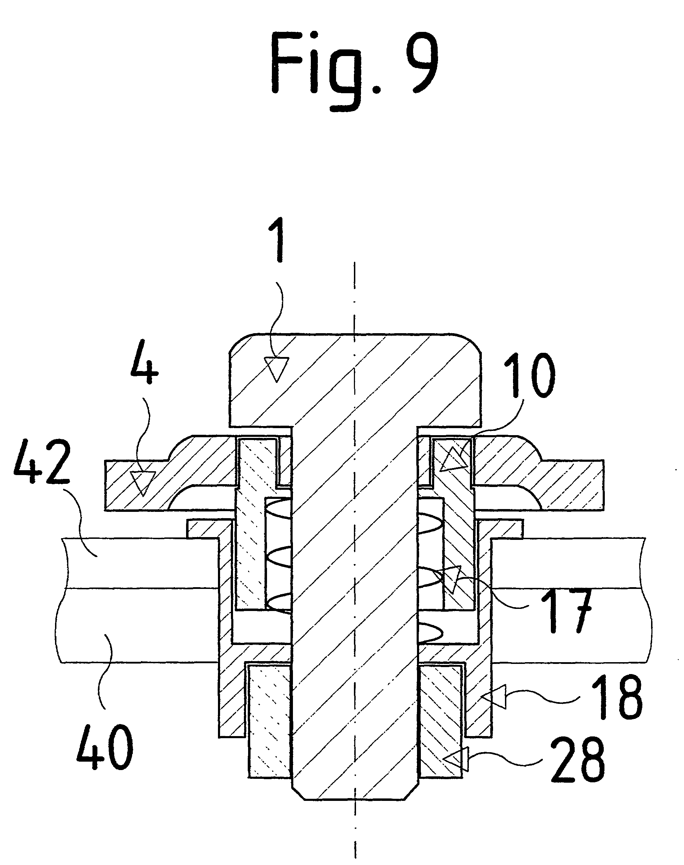

Zu Befestigungszwecken wird ein solches Bauteil 42 außen auf die Seite der Halteschiene 39 mit dem Montageschlitz 41 aufgelegt, so daß das Loch 44 mit seiner Längsmittelachse auf der Längsmittelachse der Halteschiene 39 angeordnet ist. Dann wird die Anordnung 38 mit der Schiebemutter 28 und dem topfförmigen Bauteil 18 durch das Loch 44 gesteckt und wird anschließend auf die Scheibe 4 bzw. den Schraubenkopf 3 gedrückt, bis sich durch Drehen der Scheibe 4 die Schiebemutter 28 unter die Randabschnitte 40 schwenken läßt. Anschließend wird die Scheibe 4 entlastet, wodurch bereits eine Vormontage des Bauteils 42 an der Halteschiene 39 erreicht wird. Diese Situation ist in Fig. 9 gezeigt. Schließlich wird die Schraube angezogen, bis die Randabschnitte 39 ausreichend zwischen der Schiebemutter 28 und der Scheibe 4 verspannt sind.

## Patentansprüche

1. Befestigungsanordnung für die Anbringung eines Bauteils (42) an einer C-förmigen Halteschiene (39), die nach innen gebogene, den Montageschlitz (41) begrenzende Randabschnitte (40) aufweist, mit folgenden Merkmalen:
- ein topfartiges Bauteil (18) mit einem Außendurchmesser kleiner als die Breite des Montageschlitzes, dessen Boden (26) ein Loch (27) und dessen oberer Rand einen radial nach außen weisenden Flansch (21) aufweist, dessen Außendurchmesser größer ist als die Breite des Montageschlitzes (41),
- einem rohrförmigen Bauteil (10), das teleskopierbar in das topfartige Bauteil (18) eingreift und drehfest mit diesem verbunden ist,
- eine Scheibe (4), deren Außendurchmesser gleich oder größer als der Außendurchmesser des radialen Flansches (21) ist, die drehfest mit einem aus dem topfartigen Bauteil (18) herausstehenden Ende des rohrförmigen Bauteils (10) verbunden ist und ein zentrales Loch (7) aufweist,
- einem Gewindebolzen (2), der das zentrale Loch (7) der Scheibe (4), das rohrförmige Bauteil (10) und das topfartige Bauteil (18) durchgreift, der an einem Ende einen die Scheibe (4) übergreifenden Kopf (3) aufweist, und der am anderen Ende in eine Gewindebohrung (29) einer länglichen Schiebemutter (28) geschraubt ist, die drehfest mit dem topfartigen Bauteil (18) verbunden ist, die durch den Montageschlitz (41) in einer vorgegebenen Ausrichtung hindurchführbar ist und die unter Einschieben des rohrförmigen Bauteils (10) in das topfartige Bauteil (18) in eine zum Montageschlitz (41) senkrechte Ausrichtung bringbar ist, in der sie die Randabschnitte (40) des Montageschlitzes untergreift.

2. Anordnung gemäß Anspruch 1, bei der das topfartige Bauteil (18) mittels axialer seitlich die längliche Schiebemutter (28) übergreifender Vorsprünge (24, 25) drehfest mit der Schiebemutter (28) verbunden ist.

3. Anordnung gemäß Anspruch 1 oder 2, bei der das topfartige Bauteil (18) innen und das rohrförmige Bauteil (10) außen komplementäre, im Querschnitt von einer Kreisform abweichende Oberflächen (12, 22) aufweisen, die eine Verdrehsicherung von topfartigem und rohrförmigem Bauteil aneinander bewirken.

4. Anordnung nach Anspruch 3, bei der topfartiges und rohrförmiges Bauteil (18, 10) im Querschnitt mehreckige Oberflächen (12, 22) aufweisen.

5. Anordnung gemäß einem der Ansprüche 1 bis 4, bei der das rohrförmige Bauteil (10) mittels axialer Vorsprünge (15, 16) an seinem aus dem topfartigen Bauteil (18) herausstehenden Ende, die in Löcher (8, 9) der Scheibe (4) eingreifen, mit dieser drehfest verbunden ist.

6. Anordnung gemäß einem der Ansprüche 1 bis 5, bei der das topfartige Bauteil (18) aus Kunststoff ist und/oder das rohrförmige Bauteil (10) aus Kunststoff ist.

7. Anordnung nach einem der Ansprüche 1 bis 6, bei der die Scheibe (4) eine untere Ausnehmung (6) aufweist, die so bemessen ist, daß sie den Flansch (21) des topfartigen Bauteils (18) so aufnimmt, daß die Scheibe (4) gegen die Außenseite der Halteschiene (39) oder eines zu befestigenden Bauteils (42) anlegbar ist.

8. Anordnung nach einem der Ansprüche 1 bis 7, bei der die Oberseiten der seitlich über das topfartige Bauteil (18) überstehenden Abschnitte der Schiebemutter (28) angeschrägt sind, um das Schwenken unter die Randabschnitte (40) der Halteschiene (39) zu erleichtern.

9. Anordnung nach einem der Ansprüche 1 bis 8, bei der die Feder (17) eine Schraubenfeder ist.

10. Anordnung nach einem der Ansprüche 1 bis 9, bei der das topfartige Bauteil (18) und das rohrförmige Bauteil (10) und die Feder (17) so bemessen sind, daß die Feder (17) das rohrförmige Bauteil (10) so weit wie möglich aus dem topfartigen Bauteil (18) herausdrückt.

11. Anordnung gemäß einem der Ansprüche 1 bis 10 mit einer Halteschiene (39), deren nach innen gebogene Randabschnitte (40) an der unteren Kante eine Zahnung aufweisen, mit der die zugekehrte Seite der Schiebemutter (28) mit mindestens einem Gegenzahn (34, 35) zusammenwirkt.

12. Anordnung nach einem der Ansprüche 1 bis 11 mit einem anzubringenden Bauteil (42), das ein Montagewinkel ist.

13. Anordnung nach Anspruch 12, bei der das zu befestigende Bauteil (42) ein schlüssellochförmiges Loch (44) aufweist und das topfartige Bauteil (18) einen kreisförmigen Abschnitt (45) des Loches (44) durchgreift und sich mit dem Flansch (21) auf dem Rand des Loches (44) abstützt.

14. Anordnung nach einem der Ansprüche 1 bis 13, bei der das topfartige Bauteil (18) außen mindestens einen Anschlag (20) aufweist, der gegen einen Gegenanschlag des Loches (44) des anzubringenden Bauteils (42) trifft, wenn die Schiebemutter unter die Randabschnitte (48) geschwenkt ist.

15. Anordnung gemäß einem der Ansprüche 1 bis 14, bei der die Schiebemutter (28) mit ihren Außenkanten innen gegen die Seitenwände der C-förmigen Halteschiene (39) trifft, wenn sie unter die Randabschnitte (40) geschwenkt ist.

16. Anordnung gemäß einem der Ansprüche 1 bis 15, bei der die Scheibe (4) Markierungen (8, 9) aufweist, die eine bestimmte Ausrichtung zur C-förmigen Halteschiene (39) haben, wenn die Schiebemutter (28) unter die Randabschnitte (40) geschwenkt ist.

17. Anordnung gemäß Anspruch 16, bei der die Markierungen (8, 9) die Löcher zur Aufnahme der axialen Vorsprünge (15, 16) des rohrförmigen Innenteiles (10) sind.

18. Anordnung gemäß einem der Ansprüche 1 bis 17, bei der die Markierungen (8, 9) in der untergeschwenkten Lage der Schiebemutter (28) auf die Längsachse der C-förmige Halteschiene (39) ausgerichtet sind.

## Claims

1. Fastening arrangement for the attachment of a component (42) on a C-shaped support rail (39) that has edge sections (40) that are bent towards the inside and that border the assembly slot (41) with the following characteristics:
- a pot-like component (18) with an external diameter smaller than the width of the assembly slot, the floor (26) of which has a hole (27) and the upper edge of which has a flange (21) pointing outwards radially, the external diameter of which is larger than the width of the assembly slot (41),
- a tubular component (10) that engages telescopically in the pot-like component (18) and is attached to it in a torque-proof manner,
- a disk (4), the external diameter of which is the same as or larger than the external diameter of the radial flange (21), which is connected in a torque-proof manner with one end of the tubular component (10) that sticks out of the pot-like component (18) and has a central hole (7),
- a threaded bolt (2), which passes through the central hole (7) of the disk (4), the tubular component (10), and the pot-like component (18), which has a head (3) overlapping the disk (4) on one end, and which is screwed into a threaded hole (29) of an oblong sliding nut (28) on the other end, which is connected in a torque-proof manner with the pot-like component (18), which can pass through the assembly slot (41) in a specified direction and, by inserting the tubular component (10) into the pot-like component (18), can be brought into a direction perpendicular to the assembly slot (41) such that it reaches under the edge section (40) of the assembly slot.

2. Arrangement in accordance with claim 1, in which the pot-like component (18) is connected in a torque-proof manner with the sliding nut (28) by means of axial projections (24, 25) overlapping the oblong sliding nut (28) laterally.

3. Arrangement in accordance with claim 1 or 2, in which the pot-like component (18) on the inside and the tubular component (10) on the outside have complementary surfaces (12, 22) differing from a circular shape in cross-section, which form an anti-twisting device for the pot-like and tubular components (12, 22).

4. Arrangement in accordance with claim 3, in which the pot-like and tubular components (18, 10) have polygonal surfaces (12, 22) in cross-section.

5. Arrangement in accordance with one of claims 1 through 4, in which the tubular component (10) is connected in a torque-proof manner with the disk (4) by means of axial projections (15, 16) on the end that sticks out of the pot-like component (18) and that engages in holes (8, 9) of the disk (4).

6. Arrangement in accordance with one of claims 1 through 5, in which the pot-like component (18) is made of plastic and/or the tubular component (10) is made of plastic.

7. Arrangement in accordance with one of claims 1 through 6, in which the disk (4) has a lower recess (6), which is measured such that it holds the flange (21) of the pot-like component (18) such that the disk (4) can be attached to the exterior side of the support rail (39) or a component (42) to be fastened.

8. Arrangement in accordance with one of claims 1 through 7, in which the top sides of the sections of the sliding nut (28) that extend past the pot-like component (18) are angled in order to facilitate the pivoting under the edge section (40) of the support rail (39).

9. Arrangement in accordance with one of claim 1 through 8, in which the spring (17) is a coil spring.

10. Arrangement in accordance with one of claims 1 through 9, in which the pot-like component (18) and the tubular component (10) and the spring (17) are measured such that the spring (17) presses the tubular component (10) as far as possible out of the pot-like component (18).

11. Arrangement in accordance with one of claims 1 through 10 with a support rail (39), the edge sections (40) of which are bent inward and have a cogging on the lower edge, with which the turned side of the sliding nut (28) works together with at least one counter-tooth (34, 35).

12. Arrangement in accordance with one of claims 1 through 11 with a component (42) to be attached that is a mounting angle.

13. Arrangement in accordance with claim 12, in which the component (42) to be attached has a key-hole-like hole (44) and the pot-like component (18) passes through a circular section (45) of the hole (44) and is supported with the flange (21) on the edge of the hole (44).

14. Arrangement in accordance with one of claims 1 through 13, in which the pot-like component (18) has at least one catch (20) on the outside, which hits a counter-catch of the hole (44) of the component (42) to be attached, if the sliding nut is pivoted under the edge sections (48).

15. Arrangement in accordance with one of claims 1 through 14, in which the outer edges of the sliding nut (28) hit the inside of the lateral walls of the C-shaped support rail (39), if it is pivoted under the edge sections (40).

16. Arrangement in accordance with one of claims 1 through 15, in which the disk (4) has markings (8, 9) that have a specific orientation to the C-shaped support rail (39), if the sliding nut (28) is pivoted under the edge sections (40).

17. Arrangement in accordance with claim 16, in which the markings (8, 9) are the holes for retaining the axial projections (15, 16) of the tubular core (10).

18. Arrangement in accordance with one of claims 1 through 17, in which the markings (8, 9) are aligned in the pivoted-under position of the sliding nut (28) on the longitudinal axis of the C-shaped support rail (39).

## Revendications

1. Dispositif de fixation pour le montage d'un composant (42) sur un rail de montage en forme de C (39) possédant des sections de bord pliées vers l'intérieur (40) délimitant la rainure de montage (41), avec les caractéristiques suivantes :
- un composant en forme de cuvette (18) d'un diamètre extérieur plus petit que la largeur de la rainure de montage, dont le fond (26) a un trou (27) et dont le bord supérieur possède une bride tournée radialement vers l'extérieur (21) dont le diamètre extérieur est supérieur à la largeur de la rainure de montage (41 ),
- un composant tubulaire (10) s'engrenant de façon télescopique dans le composant en forme de cuvette (18) et relié à celui-ci de manière anti-giratoire,
- une rondelle (4) d'un diamètre extérieur égal ou supérieur au diamètre extérieur de la bride radiale (21), reliée de manière anti-giratoire avec l'extrémité du composant tubulaire (10) sortant du composant en forme de cuvette (18) et ayant un trou central (7),
- un boulon fileté (2), passant dans le trou central (7) de la rondelle (4), dans le composant tubulaire (10) et le composant en forme de cuvette (18), portant d'un côté une tête (3) surplombant la rondelle (4) et dont l'autre côté est vissé dans un alésage fileté (29) d'un écrou coulissant (28), relié de manière anti-giratoire avec le composant en forme de cuvette (18), pouvant être passé dans la rainure de montage (41) dans une direction prédéterminée et qui, en faisant coulisser le composant tubulaire (10) dans le composant en forme de cuvette (18) peut être tourné dans une direction verticale par rapport à la rainure de montage (41) où il s'agrippe sous les sections de bord (40) de la rainure de montage.

2. Dispositif selon la revendication 1 où le composant en forme de cuvette (18) est accouplé de manière anti-giratoire à l'écrou coulissant (28) par des épaulements (24, 25) qui emprisonnent la partie longue de l'écrou coulissant (28).

3. Dispositif selon la revendication 1 ou 2 où l'intérieur du composant en forme de cuvette (18) et l'extérieur du composant tubulaire (10) possèdent des surfaces (12, 22) aux sections complémentaires, non circulaires qui empêchent la rotation mutuelle du composant en forme de cuvette et du composant tubulaire.

4. Dispositif selon la revendication 3 où les sections des composants en forme de cuvette et en forme de tube (18, 10) sont des polyèdres (12, 22).

5. Dispositif selon l'une des revendications 1 à 4 où le composant tubulaire (10) avec ses saillies axiales (15, 16) sortant à sont extrémité du composant en forme de cuvette (18), passent dans les trous (8, 9) de la rondelle (4) est y sont accouplées de manière anti-giratoire.

6. Dispositif selon l'une des revendications 1 à 5 où le composant en forme de cuvette (18) et/ou le composant tubulaire (10) sont réalisés en matière plastique.

7. Dispositif selon l'une des revendications 1 à 6 où la rondelle (4) possède une partie emboutie (6), dimensionnée de sorte à permettre le logement de la bride (21) du composant en forme de cuvette (18) tout en s'appuyant sur la face extérieure du rail de montage (39) ou sur celle d'un composant (42) à fixer sur le rail.

8. Dispositif selon l'une des revendications 1 à 7 où les surfaces extérieures des branches de l'écrou coulissant (28) dépassant les épaulements du composant en forme de cuvette (18) sont biseautées afin de faciliter leur pivotement sous les sections du bord (40) du rail de montage (39).

9. Dispositif selon l'une des revendications 1 à 8 où le ressort (17) est un ressort hélicoïdal.

10. Dispositif selon l'une des revendications 1 à 9 où le composant en forme de cuvette (18), le composant tubulaire (10) et le ressort (17) sont dimensionnés de sorte que le ressort (17) puisse faire sortir le plus loin possible le composant tubulaire (10) du composant en forme de cuvette (18).

11. Dispositif selon l'une des revendications 1 à 10 avec un rail de montage (39) dont les sections du bord pliées vers l'intérieur (40) portent à leur bord inférieur une denture permettant de coopérer avec au moins une des dentures (34, 35) de la face opposée de l'écrou coulissant (28).

12. Dispositif selon l'une des revendications 1 à 11 où le composant à fixer sur le rail est une équerre de montage (42).

13. Dispositif selon la revendication 12 où le composant à fixer sur le rail (42) possède une ouverture en forme d'entrée de serrure (44) et où le composant en forme de cuvette (18) passe dans une section circulaire (45) du trou (44) et vient s'appuyer sur le bord du trou (44) avec la bride (21).

14. Dispositif selon l'une des revendications 1 à 13 où l'extérieur de la cuvette (18) possède au moins une butée (20) susceptible de coopérer avec la contre-butée du trou (44) du composant à fixer (42) lorsque l'écrou coulissant est pivoté sous les sections du bord (48).

15. Dispositif selon l'une des revendications 1 à 14 où les arêtes extérieures de l'écrou coulissant (28) rencontrent les bords latéraux du rail de montage en forme de C (39) lorsqu'elles sont pivotées sous les sections du bord (40).

16. Dispositif selon l'une des revendications 1 à 15 où la rondelle (4) porte des repères (8, 9) ayant une orientation déterminée par rapport au rail de montage (39) lorsque l'écrou coulissant (28) est pivoté sous les sections du bord (40).

17. Dispositif selon la revendication 16 où les repères (8, 9) sont des trous pour loger les saillies axiales (15, 16) de la partie tubulaire intérieure (10).

18. Dispositif selon l'une des revendications 1 à 17 où les repères (8, 9) sont parallèles à l'axe longitudinal du rail de montage en forme de C (39) lorsque l'écrou coulissant (28) est en position pivoté en dessous.
